# EUROPEAN PATENT APPLICATION

(11) **EP 4 498 733 A1**
(43) Date of publication of application: **29.01.2025**
(21) Application number: 24179351.2
(22) Date of filing: 31.05.2024
(51) Int. Cl.: H04W 48/20, H04W 4/24, H04W 88/04, H04W 8/00

(54) **METHOD AND APPARATUS FOR DATA INTERACTION, ELECTRONIC DEVICE, AND STORAGE MEDIUM**

(30) Priority: 26.07.2023 CN 202310927267
(71) Applicant: Beijing Xiaomi Mobile Software Co., Ltd., Beijing 100085 (CN)
(72) Inventor: LIU, Shuyong, Beijing, 100085 (CN); LI, Xiang, Beijing, 100085 (CN)
(74) Representative: Dehns Germany Partnerschaft mbB

(57) **Abstract**

A method for data interaction is performed by a first terminal, relates to the field of computer technology and includes: in response to a preset search condition being satisfied, searching for (201) at least one second terminal, wherein the at least one second terminal has a communication interconnection function enabled; establishing (202) a communication interconnection with the at least one second terminal; and performing (203) data interaction with a core network through the at least one second terminal.

## Description

### TECHNICAL FIELD

The present disclosure relates to the field of computer technology, and in particular to method and apparatus for data interaction, an electronic device, and a storage medium.

### BACKGROUND

High-frequency networks are networks that use higher frequency wireless signals for communication. Compared to low-frequency networks, high-frequency networks are characterized by faster signal transmission rates, but shorter signal propagation distances and poorer penetration capabilities, which can lead to a relatively small coverage area of a single base station.

### SUMMARY

Embodiments of the present disclosure provide a method and apparatus for data interaction, an electronic device, and a storage medium.

According to a first aspect of the present disclosure, a method for data interaction performed by a first terminal, includes: searching for at least one second terminal in response to a preset search condition being satisfied, wherein the at least one second terminal has a communication interconnection function enabled; establishing a communication interconnection with the at least one second terminal; and performing data interaction with a core network through the at least one second terminal.

In an embodiment, performing data interaction with the core network through the at least one second terminal includes determining that the at least one second terminal has successfully established a communication interconnection with the core network; and performing data interaction with the core network through the at least one second terminal.

In an embodiment, performing data interaction with the core network through the at least one second terminal includes: sending, when determining that there exists among the at least one second terminal a target terminal which has not successfully established a communication interconnection with the core network, an instruction information to the target terminal, where the instruction information is used to instruct the target terminal to establish a communication interconnection with the core network; and performing data interaction with the core network through the at least one second terminal when determining that the target terminal has successfully established a communication interconnection with the core network.

In an embodiment, the method further includes releasing a communication interconnection established with the target terminal when determining that the target terminal has not successfully established a communication interconnection with the core network within a first preset time period.

In an embodiment, the preset search condition includes at least one of the following: receiving a search instruction; detecting that a signal strength of the first terminal satisfies a preset signal strength condition; detecting that a movement speed of the first terminal satisfies a preset movement speed condition; detecting that an altitude of the first terminal satisfies a preset altitude condition; and detecting that a signal quality of the first terminal satisfies a preset signal quality condition.

In an embodiment, the communication interconnection function includes at least one of the following: wireless fidelity Wi-Fi, Bluetooth. Searching for the at least one second terminal includes searching for the at least one second terminal via Wi-Fi and/or Bluetooth. Establishing the communication interconnection with the at least one second terminal includes establishing the communication interconnection with the at least one second terminal via Wi-Fi, and/or Bluetooth.

In an embodiment, after establishing the communication interconnection with the at least one second terminal, the method further includes searching for an alternative terminal capable of replacing the at least one second terminal upon detecting that a connection state with the at least one second terminal has dropped to a state that satisfies a preset connection condition; where the alternative terminal is a terminal that has enabled the communication interconnection function and is capable of performing data interaction with the core network; and outputting a reminder message, where the reminder message is used to remind the user of the existence of the alternative terminal.

In an embodiment, establishing the communication interconnection with the at least one second terminal, includes determining at least one third terminal from the at least one second terminal; and establishing a communication interconnection with the at least one third terminal. Performing data interaction with the core network through the at least one second terminal includes performing data interaction with the core network through the at least one third terminal.

In an embodiment, determining the at least one third terminal from the at least one second terminal, includes: obtaining a blacklist or a whitelist corresponding to the first terminal, where the whitelist includes second terminals allowed to establish communication interconnection with the first terminal, and the blacklist includes second terminals not allowed to establish communication interconnection with the first terminal; and determining, among the at least one second terminal, a second terminal present in the whitelist or a second terminal not present in the blacklist as the third terminal.

In an embodiment, determining the at least one third terminal from the at least one second terminal, includes determining fee information corresponding to each of the at least one second terminal, where the fee information is used to characterize a cost required for data interaction after establishing the communication interconnection; and determining a second terminal corresponding to fee information that satisfies a preset fee condition as the third terminal.

In an embodiment, after establishing the communication interconnection with the at least one third terminal, the method further includes determining, when disconnecting the communication interconnection established with the at least one third terminal, a payment amount based on fee information corresponding to the at least one third terminal and a duration of the communication interconnection; and completing a payment operation to the at least one third terminal based on the payment amount.

In an embodiment, after establishing the communication interconnection with the at least one second terminal, the method further includes disconnecting the communication interconnection established with the at least one second terminal when a preset disconnection condition is satisfied; where the preset disconnection condition includes at least one of the following: detecting that a wireless signal parameter value of a cell in which the first terminal is located satisfies a first preset parameter value condition; detecting that a duration of the communication interconnection reaches a preset duration; detecting that a total amount of traffic used by the first terminal reaches a preset traffic value.

According to a second aspect of the present disclosure, a method for data interaction performed by a second terminal, includes: enabling a communication interconnection function in response to receiving a communication interconnection enabling instruction; and establishing a communication interconnection with a first terminal, thereby enabling the first terminal to perform data interaction with a core network through the second terminal.

In an embodiment, when the second terminal is a target terminal that has not successfully established a communication interconnection with the core network, after establishing the communication interconnection with the first terminal, the method further includes receiving an instruction information sent from the first terminal, where the instruction information is used to instruct the target terminal to establish a communication interconnection with the core network; and establishing the communication interconnection with the core network based on the instruction information.

In an embodiment, the method further includes releasing the communication interconnection established with the first terminal when determining that the communication interconnection with the core network has not been successfully established within a second preset time period.

In an embodiment, enabling the communication interconnection function in response to receiving the communication interconnection enabling instruction, includes enabling the communication interconnection function upon receiving the communication interconnection enabling instruction and determining that a wireless signal parameter value of the second terminal satisfies a second preset parameter value condition.

In an embodiment, establishing the communication interconnection with the first terminal includes at least one of the following: establishing the communication interconnection with the first terminal in response to a successful verification to a password sent from the first terminal; establishing the communication interconnection with the first terminal in response to determining that the first terminal is present in a whitelist corresponding to the second terminal or is not present in a blacklist corresponding to the second terminal, where the whitelist includes first terminals allowed to establish a communication interconnection with the second terminal, and the blacklist includes first terminals not allowed to establish a communication interconnection with the second terminal; establishing the communication interconnection with the first terminal in response to determining that a number of terminals establishing communication interconnection with the second terminal satisfies a preset number condition.

In an embodiment, after establishing the communication interconnection with the first terminal, the method further includes when disconnecting the communication interconnection established with the first terminal, determining a payment amount corresponding to the first terminal based on fee information corresponding to the second terminal and a duration of the communication interconnection.

According to a third aspect of the present disclosure, there is provided a device for data interaction, including: a searching module configured to search for at least one second terminal when a preset search condition is satisfied, where the second terminal is a terminal which has enabled a communication interconnection function; a first establishing module configured to establish a communication interconnection with the at least one second terminal; and a data interacting module configured to perform data interaction with a core network through the at least one second terminal.

According to a fourth aspect of the present disclosure, there is provided a device for data interaction, including an enabling module configured to enable a communication interconnection function in response to receiving a communication interconnection enabling instruction; and a second establishing module configured to establish a communication interconnection with a first terminal to enable the first terminal to perform data interaction with a core network through the second terminal.

According to a fifth aspect of the present disclosure, there is provided a computer-readable storage medium having computer-readable instructions stored thereon, where the computer-readable instructions are invoked and executed by a processor to implement the method for data interaction according to any of embodiments of the present disclosure.

According to a sixth aspect of the present disclosure, there is provided an electronic device, including: a processor; a memory for storing processor executable instructions; where the processor is configured to perform the method for data interaction according to any of embodiments.

The technical solution provided by embodiments of the present disclosure may include the following beneficial effects.

In the data interaction method and apparatus, storage medium, and electronic device provided by embodiments of the present disclosure, at least one second terminal is searched for when the first terminal satisfies a preset search condition, where the second terminal is a terminal that has a communication interconnection function enabled. Then, the first terminal establishes a communication interconnection with the at least one second terminal, and performs data interaction with a core network through the at least one second terminal. In the data interaction method provided by embodiments of the present disclosure, when the first terminal is in an area with no base station coverage, or with base station coverage but with relatively weak signal, the first terminal may use the second terminal which has enabled the communication interconnection function and which can perform the data interaction with the core network as a relay, so as to realize data interaction with the core network, thereby effectively expanding the network coverage.

It should be understood that the above general description and the later detailed description are merely exemplary and explanatory, and do not limit the present disclosure.

### BRIEF DESCRIPTION OF THE DRAWINGS

The accompanying drawings herein, which are incorporated into and form a part of the specification, illustrate embodiments consistent with the present disclosure and are used in conjunction with the specification to explain the principles of the present disclosure.
FIG. 1 is a system architecture diagram of a data interaction system according to an embodiment of the present disclosure.
FIG. 2 is a flowchart of a method for data interaction according to an embodiment of the present disclosure.
FIG. 3 is a flowchart of a method for data interaction according to an embodiment of the present disclosure.
FIG. 4 is a flowchart of a method for data interaction according to an embodiment of the present disclosure.
FIG. 5 is a schematic diagram of a device for data interaction according to an embodiment of the present disclosure.
FIG. 6 is a schematic diagram of a device for data interaction according to an embodiment of the present disclosure.
FIG. 7 is a schematic diagram of an electronic device according to an embodiment of the present disclosure.

### DETAILED DESCRIPTION

Exemplary embodiments will be described herein in detail, examples of which are represented in the accompanying drawings. When the following description relates to the accompanying drawings, the same numerals in the different accompanying drawings indicate the same or similar elements unless otherwise indicated. The embodiments described in the following exemplary embodiments do not represent all embodiments consistent with the present disclosure. Rather, they are only examples of devices and methods consistent with some aspects of the present disclosure as detailed in the appended claims.

The term used in this disclosure is used solely for the purpose of describing particular embodiments and is not intended to limit the present disclosure. The singular forms of "a", "the", and "the" as used in this disclosure and the appended claims are also intended to encompass the plural form, unless the context clearly indicates other meaning. It should also be understood that the term "and/or" as used herein refers to and encompasses any or all possible combinations of one or more of the associated listed items.

It should be understood that while the terms first, second, third, etc. may be used in the present disclosure to describe various pieces of information, such information should not be limited to these terms. These terms are used only to distinguish the same type of information from one another For example, without departing from the scope of the present disclosure, first information may also be referred to as second information, and similarly, second information may be referred to as first information. Depending on the context, as used herein, the phrase "if" can be interpreted as "at ......" or "when ......" or "in response to determining".

When a terminal is in an area with no base station coverage, or with base station coverage but with a relatively weak signal, it may not perform data interaction with a core network. For example, the terminal may not use various operator services such as making phone calls, sending text messages, or the like.

In view of this, the present disclosure provides a method for data interaction. In the method of an embodiment of the present disclosure, when a terminal is in an area with no base station coverage, or with base station coverage but with a relatively weak signal, the terminal can use at least one terminal that has the communication interconnection function enabled and can perform normal data interaction with the core network as a relay, so as to realize the data interaction with the core network and effectively expand the network coverage.

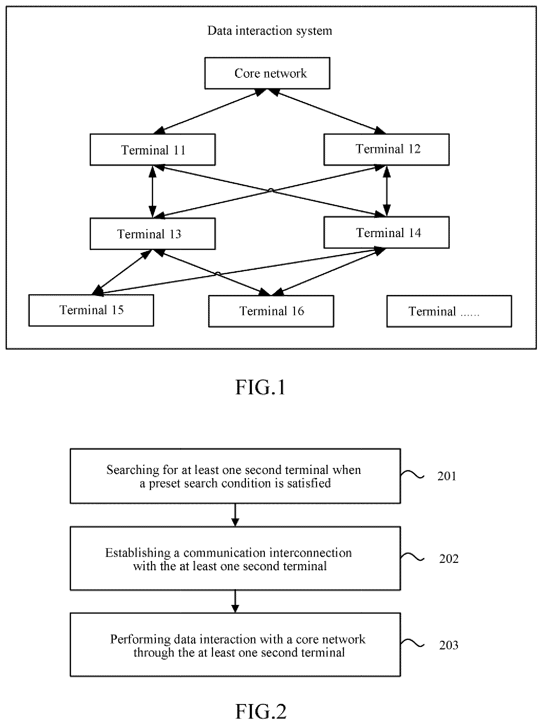

FIG. 1 is a system architecture diagram of a data interaction system according to an embodiment of the present disclosure. As shown in FIG. 1, the system may include a core network, a terminal 11, a terminal 12, a terminal 13, a terminal 14, a terminal 15, a terminal 16, etc. The terminal 11 and the terminal 12 can directly perform data interaction with the core network. The terminal 13, the terminal 14, the terminal 15 and the terminal 16 cannot directly perform data interaction with the core network due to being in an area without a base station coverage, or with a base station coverage but with a relatively weak signal.

In an example, when a terminal, that is in an area with no base station coverage, or with base station coverage but with a relatively weak signals, needs to perform data interaction with the core network, at least one second terminal that can perform data interaction with the core network may be determined first, and the second terminal may be used as a relay through which the data interaction with the core network is performed.

Taking the terminal 13 in FIG. 1 as an example, when the terminal 13 needs to perform data interaction with the core network, the terminal 13 may use only the terminal 11 as the second terminal. Alternatively, the terminal 13 may use only the terminal 12 as the second terminal. Alternatively, the terminal 13 may use the terminal 11 and the terminal 12 as the second terminals. The present disclosure is not limited to this.

Taking the terminal 13 using the terminal 11 and the terminal 12 as the second terminals as an example, the terminal 13 may establish communication interconnections with the terminal 11 and the terminal 12 respectively, and then send the data that it wants to send to the core network to the terminal 11 and the terminal 12 first through the established communication interconnections, and the terminal 11 and the terminal 12 will send the data to the core network. Similarly, data sent from the core network to the terminal 13 can be sent to the terminal 11 and the terminal 12 first, and the terminal 11 and the terminal 12 forward the data to the terminal 13 through the established communication interconnection.

Compared to the method in which the terminal 13 only uses the terminal 11 or the terminal 12 as the second terminal, in this example, using both the terminal 11 and the terminal 12 as the second terminal can reduce the probability that a problem with the second terminal, which acts as a relay, prevent the terminal 13 from performing normal data interaction with the core network. Moreover, by using two terminals as relays, the data that the terminal 13 wants to send to the core network can be shunted to the two terminals, and more data can be transmitted at the same time, thereby accelerating the speed of data interaction.

Similarly, when the terminal 14 and the like need to perform data interaction with the core network, the terminal 11 and/or the terminal 12, which can directly perform data interaction with the core network, can be used as a relay to perform data interaction with the core network as in the aforementioned embodiment. Details can be found in the description of the foregoing embodiments and will not be repeated herein.

In another example, as shown in FIG. 1, when the terminal 15, the terminal 16, etc., needs to perform data interaction with the core network, the terminal 13 and/or the terminal 14 may also be determined as a second terminal. Data interaction with the core network is performed through the second terminal.

Taking the terminal 15 only determining the terminal 13 as the second terminal as an example, the terminal 15 may establish a communication interconnection with the terminal 13, and then send the data that it wants to send to the core network to the terminal 13 first through the established communication interconnection. The terminal 13 sends the data to the terminal 11 and the terminal 12 through the established communication interconnection. The terminal 11 and the terminal 12 forward the data to the core network.

In the present example, after the terminal 15 can perform data interaction with the core network, the terminal 15 can also act as a relay for other terminals that cannot directly perform data interaction with the core network, so that the network coverage can be effectively expanded.

It should be noted that the above description is merely schematic and is intended to enable those skilled in the art to better understand the technical solutions of the embodiments of the present disclosure. In practice, there may be three or even more terminals directly performing data interaction with the core network. A terminal that is unable to directly perform data interaction with the core network may also select three, or even more, terminals as the second terminals at the same time, and the present disclosure is not limited thereto.

FIG. 2 is a flowchart of a method for data interaction according to an embodiment of the present disclosure, which may be performed by a first terminal. The first terminal may be located in an area with no base station coverage, or with base station coverage but with a relatively weak signal thereby data interaction with the core network being impossible. For example, the first terminal may be the terminal 13, the terminal 14, the terminal 15, the terminal 16, and the like in FIG. 1. As shown in FIG. 2, the method may include the following steps.

In step 201, searching for at least one second terminal when a preset search condition is satisfied.

The second terminal is a terminal that has the communication interconnection function enabled. The communication interconnection function may be a function that supports wireless communication, for example, Wi-Fi (Wireless Fidelity), Bluetooth function.

In some examples, the preset search condition may include at least one of the following: receiving a search instruction; detecting that a signal strength of the first terminal satisfies a preset signal strength condition; detecting that a movement speed of the first terminal satisfies a preset movement speed condition; detecting that an altitude of the first terminal satisfies a preset altitude condition; or detecting that a signal quality of the first terminal satisfies a preset signal quality condition.

In an example, the operation of the first terminal searching for at least one second terminal may be manually triggered as follows.

The user may issue a search instruction when it is determined that the first terminal is in an area with a weak signal, or no signal. The first terminal begins to perform the operation of searching for the at least one second terminal upon receiving the search instruction issued by the user

In some examples, after the first terminal receives the search instruction issued by the user, it may output a corresponding prompt information, which may include, e.g., the signal quality and signal strength of the cell that the terminal is currently residing is acceptable, asking if the user is sure to perform a search, or informing the user that the following operation is risky and asking if the user is sure to proceed.

The specific content of the prompt information may be preset based on the actual situation, and the present disclosure is not limited thereto.

In another example, the operation of the first terminal searching for at least one second terminal may be automatically triggered.

For example, the first terminal may begin to perform the operation of searching for the at least one second terminal when it detects that its own signal strength satisfies a preset signal strength condition.

The signal strength refers to the transmission power or electric field strength of the signal, which indicates the energy level of the wireless signal during transmission. The signal strength is usually expressed by a Signal Strength Indicator (SSI) in dBm. The preset signal strength condition may be lower than or equal to a preset signal strength value. When the first terminal detects that its own signal strength is lower than or equal to this preset signal strength value, it begins to perform the operation of searching for at least one second terminal. Alternatively, the preset signal strength condition may also be within a range of a signal strength value. When the first terminal detects that its own signal strength value is within the range, it begins to perform the operation of searching for the at least one second terminal.

Also for example, the first terminal may begin to perform the operation of searching for the at least one second terminal when it detects that its own movement speed satisfies the preset movement speed condition.

The preset movement speed condition may be greater than or equal to a preset movement speed value, which may be, for example, 220km/h. When the first terminal detects that its own movement speed is greater than or equal to 220km/h, it indicates that the first terminal currently needs to constantly switch the cell in which it resides, that the signal is unstable, and that there may be a situation in which it is unable to perform a normal data interaction with the core network, and, therefore, the operation of searching for the at least one second terminal begins to be performed.

It should be noted that the above description of the movement speed value of 220 km/h is merely schematic, and is intended to enable those skilled in the art to better understand the technical solutions of the embodiments of the present disclosure. In practical application, the movement speed value can also be set to 200km/h, 210km/h, etc., which can be set by the relevant staff based on the actual situation, and the present disclosure is not limited thereto.

As another example, the first terminal may begin to perform the operation of searching for the at least one second terminal when it detects that its own altitude satisfies a preset altitude condition.

The preset altitude condition may be greater than or equal to a preset altitude value, which may be for example 10,000 feet. When the first terminal detects that its own altitude value is greater than or equal to 10,000 feet, it indicates that the first terminal is currently in an area that cannot be covered by the ground base station and cannot directly perform data interaction with the core network, and therefore begins to perform the operation of searching for the at least one second terminal.

As another example, the first terminal may begin to perform the operation of searching for the at least one second terminal when it detects that its own signal quality satisfies a preset signal quality condition.

The signal quality is used to characterize the reliability and stability of the signal during transmission. The signal quality is usually measured by parameters such as Signal-to-Noise Ratio (SNR) and Bit Error Rate (BER), etc. Higher signal quality indicates relatively stable signal transmission, less interference, and high data transmission accuracy. The preset signal quality condition may be lower than or equal to a preset signal quality value, and when the first terminal detects that its own signal quality value is lower than or equal to the preset signal quality value, it begins to perform the operation of searching for the at least one second terminal. Alternatively, the preset signal quality condition may also be within a range of a signal quality value, and when the first terminal detects that its own signal quality value is within such range, it begins to perform the operation of searching for the at least one second terminal.

In step 202, establishing a communication interconnection with the at least one second terminal.

In step 203, performing data interaction with a core network through the at least one second terminal.

In an example, after the first terminal has established a communication interconnection with the at least one second terminal, it may be further determined whether the at least one second terminal has successfully established a communication interconnection with the core network.

When the first terminal determines that the at least one second terminal has successfully established a communication interconnection with the core network, it can perform data interaction with the core network through the at least one second terminal, and the detailed process of data interaction can be referred to the introduction of the aforementioned embodiment, and will not be repeated here.

When the first terminal determines that there exists among the at least one second terminal a target terminal which has not successfully established a communication interconnection with the core network, the first terminal may send to the target terminal an instruction information for instructing the target terminal to establish a communication interconnection with the core network. When the first terminal determines that the target terminal has successfully established a communication interconnection with the core network, it may perform data interaction with the core network through the at least one second terminal.

Taking the terminal 15 in FIG. 1 being the first terminal as an example, after the terminal 15 establishes a communication interconnection with the terminal 13, the terminal 15 may further determine whether the terminal 13 has successfully established a communication interconnection with the core network.

When the terminal 15 determines that the communication interconnection between the terminal 13 and the core network has been successfully established, the terminal 15 may perform data interaction with the core network through the terminal 13.

When the terminal 15 determines that the terminal 13 has not successfully established a communication interconnection with the core network, the terminal 15 may send to the terminal 13 an instruction information for instructing the terminal 13 to establish a communication interconnection with the core network. The terminal 13 may establish the communication interconnection with the core network through the terminal 11 and/or the terminal 12 upon receiving the instruction information. When the terminal 15 determines that the terminal 13 has successfully established the communication interconnection with the core network, it may perform data interaction with the core network through the terminal 13.

In an example, when the first terminal determines that the target terminal has not successfully established a communication interconnection with the core network within a first predetermined time period, it releases the communication interconnection established with the target terminal. For example, the first preset time period may be such as 5 milliseconds, 3 milliseconds, etc., and the present disclosure is not limited thereto.

Still taking the terminal 15 in FIG. 1 being a first terminal as an example, when the terminal 15 determines that the terminal 13 has not successfully established a communication interconnection with the core network within the first predetermined time period, the terminal 15 may release the communication interconnection established with the terminal 13.

In some examples, after the first terminal releases the communication interconnection established with the target terminal, the first terminal may perform data interaction with the core network based on other second terminals that have successfully established the communication interconnection with the core network. Alternatively, the first terminal may re-search for second terminals that satisfy the conditions and establish communication interconnections with the re-searched second terminals, and the present disclosure is not limited thereto.

For example, when the communication interconnection function is Wi-Fi, the first terminal may search for at least one second terminal through a Wi-Fi interface, and after finding the at least one second terminal, the first terminal may establish a communication interconnection with the at least one second terminal through Wi-Fi. Then, data that is desired to be sent to the core network is sent to the at least one second terminal through Wi-Fi to cause the at least one second terminal to send the data to the core network.

When the communication interconnection function is Bluetooth, the first terminal may search for at least one second terminal through a Bluetooth interface and, after finding the at least one second terminal, the first terminal may establish a communication interconnection with the at least one second terminal through Bluetooth. Then, data that is desired to be sent to the core network is sent to the at least one second terminal by means of Bluetooth transmission to cause the at least one second terminal to send the data to the core network.

In some examples, when the communication interconnection function is Bluetooth, the at least one second terminal, after the Bluetooth function is enabled, can broadcast. When the first terminal receives the broadcast message, it is equivalent to finding the at least one second terminal via Bluetooth.

When the communication interconnection function is Wi-Fi and Bluetooth, the first terminal can search for the at least one second terminal through a Wi-Fi interface, and after finding it, establish a communication interconnection with the at least one second terminal through Bluetooth. Then, data that is desired to be sent to the core network is sent to the at least one second terminal by means of Bluetooth transmission to cause the at least one second terminal to send the data to the core network. Alternatively, the first terminal may search for the at least one second terminal via a Bluetooth interface and, after finding it, establish a communication interconnection with the at least one second terminal via Wi-Fi. Then, data that is desired to be sent to the core network is sent to the at least one second terminal via Wi-Fi to cause the at least one second terminal to send the data to the core network.

It should be noted that the above is explained by taking the first terminal sending data to the core network as an example, and in actual application, the process of sending data from the core network to the first terminal is similar to the above, which can be seen in the introduction of the foregoing embodiments and will not be repeated herein.

The method for data interaction provided by embodiments of the present disclosure searches for at least one second terminal when the first terminal satisfies a preset search condition, where the second terminal is a terminal with a communication interconnection function enabled. Then, a communication interconnection is established with the at least one second terminal for data interaction with the core network through the at least one second terminal. In the method for data interaction provided by embodiments of the present disclosure, when the first terminal is in an area with no base station coverage, or with base station coverage but with a relatively weak signal, the first terminal may use the at least one second terminal that has the communication interconnection function enabled and that can perform normal data interaction with the core network as a relay, so as to realize data interaction with the core network and effectively expand network coverage.

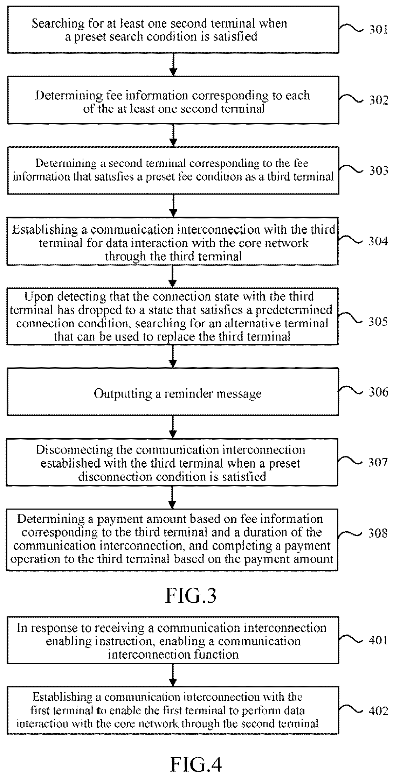

FIG. 3 is a flowchart of a method for data interaction according to an embodiment of the present disclosure. As shown in FIG. 3, the method may include the following steps.

In step 301, searching for at least one second terminal when a preset search condition is satisfied.

The second terminal is a terminal that has the communication interconnection function enabled and can perform data interaction with the core network. The communication interconnection function is used to characterize a function that supports wireless communication, for example, Wi-Fi, Bluetooth function.

In some examples, the preset search conditions may include at least one of the following: receiving a search command; detecting that the signal strength of the first terminal satisfies a preset signal strength condition; detecting that the movement speed of the first terminal satisfies a preset movement speed condition; detecting that the altitude of the first terminal satisfies a preset altitude condition; or detecting that the signal quality of the first terminal satisfies a preset signal quality condition.

In step 302, determining fee information corresponding to each of the at least one second terminal.

The fee information indicates the cost required for data interaction after establishing the communication interconnection.

In some examples, in practice, the fee information is often characterized in terms of the cost that the user needs to pay per unit of time. For example, the first terminal may determine that the fee information corresponding to each of the second terminals is 3 yuan/minute, 5 yuan/minute, 7 yuan/minute, and the like.

In step 303, determining a second terminal corresponding to the fee information that satisfies a preset fee condition as a third terminal.

In an example, the preset fee condition may be a predetermined range of fee information, which may be, for example, 2 yuan/minute-6 yuan/minute. The first terminal may determine a second terminal corresponding to the fee information within this range of fee information, as the third terminal.

In this example, the first terminal may determine a second terminal corresponding to the fee information of 3 yuan/minute, 5 yuan/minute, as the third terminal.

In another example, the preset fee condition may be the lowest fee information. The first terminal may determine a second terminal corresponding to the lowest fee information, as the third terminal.

In this example, the first terminal may determine a second terminal corresponding to the fee information of 3 yuan/minute, as the third terminal.

In some examples, the first terminal may obtain in advance a blacklist or a whitelist corresponding to the first terminal. The whitelist includes second terminals that are allowed to establish communication interconnection with the first terminal, and the blacklist includes second terminals that are not allowed to establish communication interconnection with the first terminal.

The first terminal may determine one of the at least one second terminal, which is present in the whitelist, or not present in the blacklist, as the third terminal.

In some examples, the first terminal may also obtain the current signal quality and signal strength of each second terminal of the at least one second terminal, and determine the third terminal by taking into account the signal quality, signal strength, and respectively corresponding fee information of each second terminal. The present disclosure does not limit the method of determining the third terminal from the at least one second terminal.

In some examples, the number of the third terminals determined may be one or more, and the present disclosure does not limit thereto. For convenience of description, the number of the third terminals determined is one as an example for subsequent embodiments.

In step 304, establishing a communication interconnection with the third terminal for data interaction with the core network through the third terminal.

The first terminal may establish a communication interconnection with the third terminal via Wi-Fi or, alternatively, may establish a communication interconnection with the third terminal via Bluetooth, and the present disclosure is not limited thereto.

In step 305, upon detecting that the connection state with the third terminal has dropped to a state that satisfies a predetermined connection condition, searching for an alternative terminal that can be used to replace the third terminal.

The alternative terminal is a terminal that has enabled the communication interconnection function and can perform data interaction with the core network. The preset connection condition may be that the signal quality and/or signal strength of the first terminal is below a preset threshold.

In the present example, the first terminal may continuously detect the current signal quality and/or signal strength after establishing the communication interconnection with the third terminal. When the first terminal detects that the current signal quality and/or signal strength is lower than the preset threshold value, it begins to search for an alternative terminal that can replace the third terminal.

In step 306, outputting a reminder message.

The reminder message is used to remind the user of the existence of the alternative terminal.

After the first terminal finding an alternative terminal that meets the requirements, it may output a reminder message to remind the user, and the user determines whether or not to use the alternative terminal to replace the third terminal as a relay for the first terminal.

If the user issues an instruction to use the alternative terminal to replace the third terminal, the first terminal may use the alternative terminal as a relay and communicate with the core network through the alternative terminal.

In this example, the first terminal may automatically search for an alternative terminal for replacing the third terminal when it detects that the connection state with the third terminal has dropped to a state that satisfies a preset connection condition, so as to avoid a situation in which the connection state between the first terminal and the third terminal is poor, resulting in the first terminal not being able to perform data interaction with the core network.

In step 307, disconnecting the communication interconnection established with the third terminal when a preset disconnection condition is satisfied.

The preset disconnection condition includes at least one of the following: detecting that a wireless signal parameter value of the cell in which the first terminal resides satisfies a first preset parameter value condition; detecting that the duration of the communication interconnection reaches a preset duration; or detecting that the total amount of traffic used by the first terminal reaches a preset traffic value.

In this example, the first terminal may automatically disconnect the communication interconnection established with the third terminal when one or more of the following conditions are satisfied:

For example, it is detected that the wireless signal parameter value of the cell in which the first terminal currently resides satisfies a first preset parameter value condition. The wireless signal parameter value may include signal strength, signal quality and the like.

The first terminal may disconnect the communication interconnection established with the third terminal when it detects that the signal quality and/or signal strength of the cell in which the first terminal currently resides is good and the first terminal can directly interact with the core network through the cell, and interact with the core network through the cell in which the first terminal currently resides.

Also for example, before the first terminal establishes a communication interconnection with the third terminal, the user may set a preset duration of the communication interconnection, for example, it may be 1 hour. When the first terminal determines that the duration of the communication interconnection established reaches 1 hour, it can automatically disconnect the communication interconnection established with the third terminal.

As another example, before the first terminal establishes the communication interconnection with the third terminal, the user may set the total amount of traffic used by the first terminal after the establishment of the communication interconnection, for example, 1G. When the first terminal determines that the total amount of traffic used after the establishment of the communication interconnection reaches 1G, it may automatically disconnect the communication interconnection established with the third terminal.

In step 308, determining a payment amount based on fee information corresponding to the third terminal and a duration of the communication interconnection, and completing a payment operation to the third terminal based on the payment amount.

In the present example, the fee information is expressed in terms of a charge to be paid by the user per unit of time.

After disconnecting the communication interconnection, the first terminal may determine a duration of the communication interconnection, which may be 60 minutes, for example. A payment amount, i.e., 180 yuan, is then determined based on the duration and the corresponding fee information of the third terminal, which may be, for example, 3 yuan/minute. The payment of 180 yuan is then made to the third terminal.

In the method for data interaction provided by embodiments of the present disclosure, the first terminal may determine the third terminal based on the fee information corresponding to each of the at least one second terminal. Then, a communication interconnection is established with the third terminal, and after disconnecting the communication interconnection, a payment amount is determined based on the fee information corresponding to the third terminal and the duration of the communication interconnection, so as to complete a payment operation to the third terminal in accordance with the payment amount, with a high usability.

FIG. 4 is a flowchart of a method for data interaction according to an embodiment of the present disclosure, which may be performed by a second terminal. As shown in FIG. 4, the method may include the following steps.

In step 401, in response to receiving a communication interconnection enabling instruction, enabling a communication interconnection function.

The communication interconnection function is a function that supports wireless communication, for example, Wi-Fi, Bluetooth function.

In an example, the target terminal may enable the communication interconnection function upon receiving the communication interconnection enabling instruction and determining that a wireless signal parameter value of the second terminal satisfies a second preset parameter value condition.

The wireless signal parameter values include signal quality, signal strength, etc., and the signal quality includes, but is not limited to, a signal-to-noise ratio, a packet loss rate, etc. The second preset parameter value condition may be that the signal quality is greater than or equal to the preset signal quality, and the signal strength is greater than or equal to the preset signal strength.

In order to provide a better signal to other terminals, the second terminal may determine whether its own signal quality and signal strength satisfy the second preset parameter value condition after receiving the communication interconnection enabling instruction.

When the second terminal determines that the current signal quality is greater than or equal to a predetermined signal quality and the signal strength is greater than or equal to a predetermined signal strength, it indicates that the current signal of the second terminal is good and that it can be used as a relay for other terminals, and thus the communication interconnection function can be enabled.

In step 402, establishing a communication interconnection with the first terminal to enable the first terminal to perform data interaction with the core network through the second terminal.

In an example, the second terminal may establish the communication interconnection with the first terminal after successful verification of a password sent by the first terminal.

When the first terminal initiates a request to establish the communication interconnection, it may carry a password corresponding to the second terminal. Upon receiving the request with the password, the second terminal may verify the password. After successful verification, the communication interconnection can be established with the first terminal.

In another example, the second terminal may establish the communication interconnection with the first terminal when it is determined that the first terminal is present in a whitelist corresponding to the second terminal, or when it is determined that the first terminal is not present in a blacklist corresponding to the second terminal.

The whitelist includes first terminals that are allowed to establish the communication interconnection with the second terminal, and the blacklist includes first terminals that are not allowed to establish communication interconnection with the second terminal.

After receiving the request from the first terminal, the target terminal may determine whether the first terminal is present in the blacklist or whitelist of the second terminal. When the second terminal determines that the first terminal is present in the whitelist corresponding to the second terminal, or is not present in the blacklist corresponding to the second terminal, it may establish the communication interconnection with the first terminal.

In another example, the second terminal may establish the communication interconnection with the first terminal when it is determined that a number of terminals with which the second terminal has established a communication interconnection satisfies a preset number condition.

The preset number condition may be less than a preset number, and the preset number may be, for example, 5. The user may preset the maximum number of communication interconnections that may be established by the second terminal to be 5. When the second terminal receives a request for a communication interconnection sent by the first terminal, it may determine the number of terminals with which the second terminal has established a communication interconnection, and when determining that the number is less than the preset number of 5, the second terminal establishes the communication interconnection with the first terminal, thereby ensuring the stability of the communication interconnection established with the target terminal.

In an example, when the second terminal establishes a communication interconnection with the first terminal and it is determined that the second terminal has successfully established a communication interconnection with the core network, the second terminal may forward the data sent by the first terminal to the core network and forward the data sent by the core network to the first terminal.

In another example, when the second terminal establishes a communication interconnection with the first terminal, but the second terminal is a target terminal that has not successfully established a communication interconnection with the core network, the target terminal may receive an instruction information for instructing the target terminal to establish a communication interconnection with the core network sent by the first terminal, and the target terminal establishes a communication interconnection with the core network based on the instruction information. Upon successful establishment of the communication interconnection, the second terminal may then forward data sent by the first terminal to the core network via the communication interconnection, and forward data sent by the core network to the first terminal.

In some examples, when the second terminal determines that the communication interconnection with the core network has not been successfully established within a second preset time period, it may release the communication interconnection established with the first terminal.

In an example, the second terminal may, upon disconnecting the communication interconnection established with the first terminal, determine a payment amount corresponding to the first terminal based on the fee information corresponding to the second terminal and the duration of the communication interconnection.

It is similar to the process of determining the payment amount on the first terminal side as described above. The second terminal may also determine the amount to be paid by the first terminal based on its own fee information and the duration of the communication interconnection established with the first terminal after disconnecting the communication interconnection established with the first terminal.

In the method for data interaction provided by embodiments of the present disclosure, the second terminal may enable the communication interconnection function after receiving a communication interconnection enabling instruction. The communication interconnection is then established with the first terminal to enable the first terminal to perform data interaction with the core network through the second terminal. In the method for data interaction provided by embodiments of the present disclosure, the second terminal may act as a relay for the first terminal that cannot directly perform data interaction with the core network, so that the first terminal may perform data interaction with the core network, which may effectively expand the network coverage.

With respect to each of the foregoing method embodiments, for the sake of simplicity of description, all of them are expressed as a series of combinations of actions, but those skilled in the art should be aware that the present disclosure is not limited by the order of the described actions, because according to the present disclosure, some of the steps may be carried out in other orders or at the same time.

Second, those skilled in the art should also be aware that the embodiments described in the specification are optional embodiments, and the actions and modules involved may not necessary for the present disclosure.

Corresponding to the foregoing embodiments of implementation method for the application function, the present disclosure also provides embodiments of implementation device for an application function and a corresponding terminal.

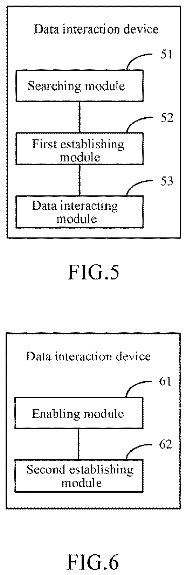

FIG. 5 is a schematic diagram of a device for data interaction according to an embodiment of the present disclosure. As shown in FIG. 5, the device for data interaction may include the following modules.

A searching module 51 is configured to search for at least one second terminal when a preset search condition is satisfied; where the second terminal is a terminal that has the communication interconnection function enabled.

A first establishing module 52 is configured to establish a communication interconnection with the at least one second terminal.

A data interacting module 53 is configured to perform data interaction with the core network through the at least one second terminal.

In some examples, the data interacting module 53, when used for data interaction with the core network through the at least one second terminal, is configured to determine that the at least one second terminal has successfully established a communication interconnection with the core network; and perform data interaction with the core network through the at least one second terminal.

In some examples, the data interacting module 53, when used for data interaction with the core network through the at least one second terminal, is configured to send, when determining that there exists among the at least one second terminal a target terminal which has not successfully established a communication interconnection with the core network, an instruction information to the target terminal, where the instruction information is used to instruct the target terminal to establish a communication interconnection with the core network; and perform data interaction with the core network through the at least one second terminal when determining that the target terminal has successfully established a communication interconnection with the core network.

In some examples, on the basis of the modules shown in Fig. 3, the device for data interaction may further include a first release module for releasing the communication interconnection established with the target terminal when determining that the target terminal has not successfully established a communication interconnection with the core network within a first preset time period.

In some examples, the preset search condition includes at least one of the following: receiving a search command; detecting that the signal strength of the first terminal satisfies a preset signal strength condition; detecting that a movement speed of the first terminal satisfies a preset movement speed condition; detecting that an altitude of the first terminal satisfies a preset altitude condition; or detecting a signal quality of the first terminal satisfies a preset signal quality condition.

In some examples, the communication interconnection function includes at least one of the following: Wi-Fi, or Bluetooth.

The searching module 51, when used to search for at least one second terminal, is configured to search for the at least one second terminal via Wi-Fi and/or Bluetooth.

The first establishing module 52, when used to establish a communication interconnection with the at least one second terminal, is configured to establish the communication interconnection with the at least one second terminal via Wi-Fi, and/or Bluetooth.

In some examples, on the basis of the modules shown in Figure 5, the device for data interaction may further include an alternative terminal searching module configured to search for an alternative terminal capable of replacing the at least one second terminal in the event that the connection state with the at least one second terminal is detected to have dropped to a state that satisfies a preset connection condition; where the alternative terminal is a terminal that has enabled the function of the communication interconnection and can perform data interaction with the core network; a reminder module configured to output a reminder message, where the reminder message is used to remind the user of the existence of the alternative terminal.

In some examples, the first establishing module 52, when used to establish a communication interconnection with the at least one second terminal, is configured to determine at least one third terminal from the at least one second terminal; and establish a communication interconnection with the at least one third terminal.

The data interacting module 53, when used for data interaction with the core network through the at least one second terminal, is configured to perform data interaction with the core network through the at least one third terminal.

In some examples, the first establishing module 52, when used to determine at least one target terminal from the at least one second terminal, is configured to obtain a blacklist or a whitelist corresponding to the first terminal; the whitelist includes second terminals that are allowed to establish communication interconnection with the first terminal, and the blacklist includes second terminals that are not allowed to establish communication interconnection with the first terminal.

Among the at least one second terminal, the second terminal present in the whitelist or the second terminal not present in the blacklist is determined as the third terminal.

In some examples, the first establishing module 52, when used to determine at least one target terminal from the at least one second terminal, is configured to determine fee information corresponding to each second terminal of the at least one second terminal; the fee information is used to characterize a cost required for data interaction after establishing the communication interconnection; and determine the second terminal corresponding to the fee information that satisfies the preset fee conditions as the third terminal.

In some examples, on the basis of the modules shown in FIG. 5, the device for data interaction may further include: a first payment amount determination module configured to determine a payment amount based on the fee information corresponding to the at least one third terminal and the duration of the communication interconnection when disconnecting the communication interconnection established with the at least one third terminal; and a payment module configured to complete a payment operation to the at least one third terminal in accordance with the payment amount.

In some examples, on the basis of the modules shown in FIG. 5, the device for data interaction may further include a communication interconnection disconnection module configured to disconnect the communication interconnection established with the at least one second terminal when a preset disconnection condition is satisfied. The preset disconnection condition includes at least one of the following: detecting that a wireless signal parameter value of a cell in which the first terminal resides satisfies a first preset parameter value condition; detecting that the duration of the communication interconnection reaches a preset duration; or detecting that the total amount of traffic used by the first terminal reaches a preset traffic value.

FIG. 6 is a schematic diagram of a device for data interaction according to an embodiment of the present disclosure. As shown in FIG. 6, the device for data interaction may include an enabling module 61 configured to enable a communication interconnection function in response to receiving a communication interconnection enabling instruction; a second establishing module 62 configured to establish a communication interconnection with a first terminal to enable the first terminal to perform data interaction with the core network through the second terminal.

In some examples, when the second terminal is a target terminal that has not successfully established a communication interconnection with the core network, on the basis of the modules shown in FIG. 6, the device for data interaction may further include a receiving module configured to receive an instruction information sent by the first terminal; the instruction information is used to instruct the target terminal to establish a communication interconnection with the core network; and a third establishing module configured to establish a communication interconnection with the core network based on the instruction information.

In some examples, on the basis of the modules shown in Figure 6, the device for data interaction may further include a second release module configured to release the communication interconnection established with the first terminal when determining that the communication interconnection with the core network has not been successfully established within a second preset time period.

In some examples, the enabling module 61, when used to enable the communication interconnection function in response to receiving a communication interconnection enabling instruction, is configured to enable the communication interconnection function upon receiving the communication interconnection enabling instruction and determining that a wireless signal parameter value of the target terminal satisfies a second preset parameter value condition.

In some examples, the second establishing module 62, when used to establish a communication interconnection with the first terminal, is configured to perform at least one of the following: in response to successful verification to a password sent from the first terminal, establishing the communication interconnection with the first terminal; in response to determining that the first terminal is present in a whitelist corresponding to the second terminal or is not present in a blacklist corresponding to the second terminal, establishing the communication interconnection with the first terminal; the whitelist includes first terminals allowed to establish a communication interconnection with the second terminal, and the blacklist includes first terminals not allowed to establish a communication interconnection with the second terminal; or in response to determining that a number of terminals establishing a communication interconnection with the second terminal satisfies a preset number condition, establishing the communication interconnection with the first terminal.

In some examples, on the basis of the modules shown in FIG. 6, the device for data interaction may further include a second payment amount determination module configured to determine, when disconnecting the communication interconnection established with the first terminal, a payment amount corresponding to the first terminal based on the fee information corresponding to the second terminal and the duration of the communication interconnection.

For the device embodiment, since it basically corresponds to the method embodiment, it is sufficient to refer to a part of the description of the method embodiment for the relevant points. The above-described device embodiments are merely schematic, where the above-described units illustrated as separated components may or may not be physically separated, and the components displayed as units may or may not be physical units, i.e., they may be located at a single place or may be distributed to a plurality of network units. Some or all of these modules can be selected to fulfill the purpose of the presently disclosed scheme according to actual needs. It can be understood and implemented by those skilled in the art without creative labor.

Accordingly, embodiments of the present disclosure provide an electronic device including: a processor; a memory for storing executable instructions of the processor; where the processor is configured to perform a method for data interaction of any embodiment of the present disclosure.

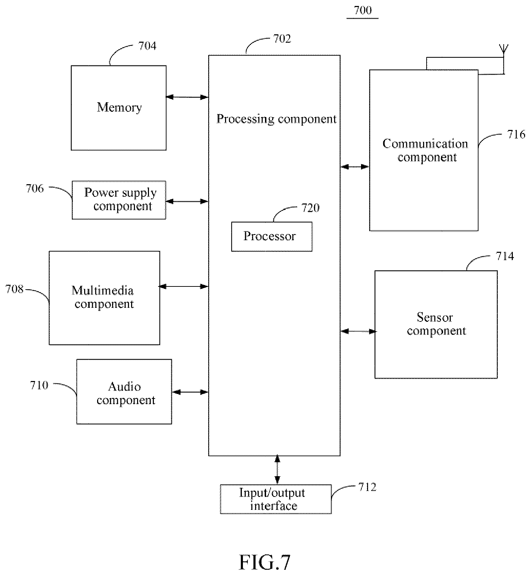

FIG. 7 is a schematic diagram of an electronic device 700 according to an embodiment. For example, the electronic device 700 may be a terminal and the like.

Referring to FIG. 7, the electronic device 700 may include one or more of the following components: a processing component 702, a memory 704, a power supply component 706, a multimedia component 708, an audio component 710, an interface 712 for input/output (I/O), a sensor component 714, and a communication component 716.

The processing component 702 generally controls the overall operation of the electronic device 700, such as operations associated with displays, telephone calls, data communications, camera operations, and recording operations. The processing component 702 may include one or more processors 720 to execute instructions to accomplish all or some of the steps of the method described above. In addition, the processing component 702 may include one or more modules to facilitate interaction between the processing component 702 and other components. For example, the processing component 702 may include a multimedia module to facilitate interaction between the multimedia component 708 and the processing component 702.

The memory 704 is configured to store various types of data to support operation at the device 700. Examples of such data include instructions for any application or method operated on the electronic device 700, contact data, phone book data, messages, pictures, videos, etc. The memory 704 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, a magnetic disk or optical disk.

The power supply assembly 706 provides power to various components of the electronic device 700. The power supply component 706 may include a power management system, one or more power supplies, and other components associated with generating, managing, and distributing power for the electronic device 700.

The multimedia component 708 includes a screen providing an output interface between the electronic device 700 and the user as described above. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, slides, and gestures on the touch panel. The touch sensors may not only sense the boundaries of the touch or slide action, but also detect the duration and pressure associated with the touch or slide operation. In some embodiments, the multimedia component 708 includes a front camera and/or a rear camera. The front camera and/or the rear camera may receive external multimedia data when the electronic device 700 is in an operating mode, such as a shooting mode or a video mode. Each of front camera and rear camera may be a fixed optical lens system or have a focal length and optical zoom capability.

The audio component 710 is configured to output and/or input audio signals. For example, the audio component 710 includes a microphone (MIC) that is configured to receive external audio signals when the electronic device 700 is in an operational mode, such as a call mode, a recording mode, and a voice recognition mode. The received audio signals may be further stored in memory 704 or sent through communication component 716. In some embodiments, the audio component 710 further includes a speaker for outputting audio signals.

The I/O interface 712 provides an interface between the processing component 702 and a peripheral interface module. The peripheral interface module may be a keypad, click wheel, buttons, etc. These buttons may include, but are not limited to: a home button, a volume button, a start button, and a lock button.

The sensor assembly 714 includes one or more sensors for providing status assessment of various aspects of the electronic device 700. For example, the sensor assembly 714 may detect an open/closed state of the electronic device 700, the relative positioning of components. For example, the aforementioned components are the display and keypad of the electronic device 700. The sensor assembly 714 may also detect a change in the position of the electronic device 700 or one of the components of the electronic device 700, the presence or absence of user contact with the electronic device 700, the electronic device 700 orientation or acceleration/deceleration and a change in temperature of the electronic device 700. The sensor assembly 714 may include a proximity sensor configured to detect the presence of a nearby object in the absence of any physical contact. The sensor assembly 714 may also include an optical sensor, such as a CMOS or CCD image sensor, for use in imaging applications. In some embodiments, the sensor assembly 714 may also include an acceleration sensor, a gyroscope sensor, a magnetic sensor, a pressure sensor, or a temperature sensor.

The communication component 716 is configured to facilitate communication between the electronic device 700 and other devices by wired or wireless means. The electronic device 700 may access a wireless network based on a communication standard such as Wi-Fi, 4G or 5G, 4G LTE, 5G NR, or a combination thereof. In an embodiment, the communication component 716 receives broadcast signals or broadcast-related information from an external broadcast management system via a broadcast channel. In an embodiment, the above-described communication component 716 further includes a near field communication (NFC) module to facilitate short-range communication. For example, the NFC module may be implemented based on Radio Frequency Identification (RFID) technology, Infrared Data Association (IrDA) technology, Ultra Wide Band (UWB) technology, Bluetooth (BT) technology, and other technologies.

In some embodiments, the electronic device 700 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the methods described above.

In some embodiments, there is also provided a non-transitory computer-readable storage medium, such as a memory 704 including instructions. The electronic device 700 is enabled to perform a method for data interaction when the instructions in the storage medium are executed by the processor 720 of the electronic device 700.

The method for data interaction includes searching for at least one second terminal when a preset search condition is satisfied; where the second terminal is a terminal that has the communication interconnection function enabled; establishing a communication interconnection with the at least one second terminal; and performing data interaction with a core network through the at least one second terminal.

The non-transitory computer-readable storage medium may be ROM, random access memory (RAM), CD-ROM, magnetic tape, floppy disk, and optical data storage device.

Other embodiments of the present disclosure will readily come to mind to those skilled in the art upon consideration of the specification and practice of the disclosure herein. The present disclosure is intended to cover any variations, uses, or adaptations of the present disclosure that follow the general principles of the present disclosure and include common knowledge or customary technical means in the art not disclosed herein. The specification and embodiments are to be regarded as exemplary only, and the true scope and spirit of the present disclosure is indicated by the following claims.

It should be understood that the present disclosure is not limited to the precise structure which has been described above and illustrated in the accompanying drawings, and that various modifications and alterations may be made without departing from its scope. The scope of the present disclosure is limited only by the appended claims.

## Claims

1. A method for data interaction, performed by a first terminal, comprising:
in response to a preset search condition being satisfied, searching for (201) at least one second terminal, wherein the at least one second terminal has a communication interconnection function enabled;
establishing (202) a communication interconnection with the at least one second terminal; and
performing (203) data interaction with a core network through the at least one second terminal.

2. The method according to claim 1, wherein performing data interaction with the core network through the at least one second terminal comprises:
determining that the at least one second terminal has successfully established a communication interconnection with the core network; and
performing data interaction with the core network through the at least one second terminal.

3. The method according to claim 1, wherein performing data interaction with the core network through the at least one second terminal comprises:
in response to determining that there exists among the at least one second terminal a target terminal which has not successfully established a communication interconnection with the core network, sending an instruction to the target terminal, wherein the instruction is configured to instruct the target terminal to establish a communication interconnection with the core network; and
in response to determining that the target terminal has successfully established a communication interconnection with the core network, performing data interaction with the core network through the at least one second terminal,
preferably, wherein the method further comprises:
in response to determining that the target terminal has not successfully established a communication interconnection with the core network within a preset time period, releasing a communication interconnection established with the target terminal.

4. The method according to any one of claims 1 to 3, wherein the preset search condition comprises at least one of:
receiving a search instruction;
detecting that a signal strength of the first terminal satisfies a preset signal strength condition;
detecting that a movement speed of the first terminal satisfies a preset movement speed condition;
detecting that an altitude of the first terminal satisfies a preset altitude condition; or
detecting that a signal quality of the first terminal satisfies a preset signal quality condition.

5. The method according to any one of claims 1 to 4, further comprising:
searching for (305) an alternative terminal capable of replacing the at least one second terminal upon detecting that a connection state with the at least one second terminal has dropped to a state that satisfies a preset connection condition, wherein the alternative terminal has enabled the communication interconnection function and is capable of performing data interaction with the core network; and
outputting (306) a reminder message, wherein the reminder message is configured to remind a user of existence of the alternative terminal.

6. The method according to any one of claims 1 to 5, wherein establishing the communication interconnection with the at least one second terminal comprises:
determining at least one third terminal from the at least one second terminal; and
establishing a communication interconnection with the at least one third terminal, and
performing data interaction with the core network through the at least one second terminal comprises:
performing data interaction with the core network through the at least one third terminal.

7. The method according to claim 6, wherein determining the at least one third terminal from the at least one second terminal comprises:
obtaining a blacklist or a whitelist corresponding to the first terminal, wherein the whitelist comprises second terminals allowed to establish communication interconnection with the first terminal, and the blacklist comprises second terminals not allowed to establish communication interconnection with the first terminal; and
determining, among the at least one second terminal, a second terminal present in the whitelist or a second terminal not present in the blacklist as the third terminal.

8. The method according to claim 6, wherein determining the at least one third terminal from the at least one second terminal comprises:
determining (302) fee information corresponding to each of the at least one second terminal, wherein the fee information indicates a cost required for data interaction after establishing the communication interconnection;
determining (303) a second terminal corresponding to fee information that satisfies a preset fee condition as the third terminal;
in response to disconnecting the communication interconnection established with the at least one third terminal, determining a payment amount based on fee information corresponding to the at least one third terminal and a duration of the communication interconnection; and
completing a payment operation to the at least one third terminal based on the payment amount.

9. The method according to any one of claims 1 to 8, further comprising:
in response to a preset disconnection condition being satisfied, disconnecting (307) the communication interconnection established with the at least one second terminal, wherein the preset disconnection condition comprises at least one of:
detecting that a wireless signal parameter value of a cell in which the first terminal is located satisfies a first preset parameter value condition;
detecting that a duration of the communication interconnection reaches a preset duration; or
detecting that a total amount of data traffic used by the first terminal reaches a preset traffic value.

10. A method for data interaction, performed by a second terminal, comprising:
in response to receiving a communication interconnection enabling instruction, enabling (401) a communication interconnection function; and
establishing (402) a communication interconnection with a first terminal, thereby enabling the first terminal to perform data interaction with a core network through the second terminal.

11. The method according to claim 10, wherein the second terminal is a target terminal that has not successfully established a communication interconnection with the core network, and the method further comprises:
receiving an instruction sent from the first terminal, wherein the instruction is configured to instruct the target terminal to establish a communication interconnection with the core network; and
establishing the communication interconnection with the core network based on the instruction,
preferably, the method further comprises:
in response to determining that the communication interconnection with the core network has not been successfully established within a preset time period, releasing the communication interconnection established with the first terminal.

12. The method according to claim 10 or 11, wherein enabling the communication interconnection function comprises:
enabling the communication interconnection function, upon receiving the communication interconnection enabling instruction and determining that a wireless signal parameter value of the second terminal satisfies a preset parameter value condition.

13. The method according to any one of claims 10 to 12, wherein establishing the communication interconnection with the first terminal comprises at least one of:
in response to a successful verification to a password sent from the first terminal, establishing the communication interconnection with the first terminal;
in response to determining that the first terminal is present in a whitelist corresponding to the second terminal or is not present in a blacklist corresponding to the second terminal, establishing the communication interconnection with the first terminal, wherein the whitelist comprises first terminals allowed to establish a communication interconnection with the second terminal, and the blacklist comprises first terminals not allowed to establish a communication interconnection with the second terminal; or
in response to determining that a number of terminals establishing communication interconnection with the second terminal satisfies a preset number condition, establishing the communication interconnection with the first terminal.

14. The method according to any one of claims 10 to 13, further comprising:
in response to disconnecting the communication interconnection established with the first terminal, determining a payment amount corresponding to the first terminal based on fee information corresponding to the second terminal and a duration of the communication interconnection.

15. A data interaction device, comprising:
a processor;
a memory for storing processor executable instructions;
wherein by executing the processor executable instructions, the processor is configured to perform steps of the method according to any one of claims 1 to 9, or steps of the method according to any one of claims 10 to 14.
